# EUROPÄISCHE PATENTSCHRIFT

(11) **EP 1 854 847 B1**
(45) Veröffentlichungstag und Bekanntmachung des Hinweises auf die Patenterteilung: **05.11.2008**
(21) Anmeldenummer: 07106947.0
(22) Anmeldetag: 25.04.2007
(51) Int. Cl.: C08L 83/04, C09J 183/04, B32B 27/00

(54) **Selbsthaftende additionsvernetzende Siliconzusammensetzungen**
Self-adhesive addition-crosslinking silicone compositions
Compositions de silicone auto-adhésives réticulantes par addition

(30) Priorität: 11.05.2006 DE 102006022097
(43) Veröffentlichungstag der Anmeldung: 14.11.2007
(73) Patentinhaber: Wacker Chemie AG, 81737 München (DE)
(72) Erfinder: Fehn, Armin, 84561, Mehring (DE)
(74) Vertreter: Fritz, Helmut

(56) Entgegenhaltungen:
- EP-A1- 1 148 098
- EP-A1- 1 375 622
- EP-A1- 1 510 553
- EP-A2- 1 266 948
- DE-A1- 19 959 412

## Beschreibung

Die Erfindung betrifft selbsthaftende, additionsvernetzende Siliconzusammensetzungen, ein Verfahren zur Herstellung additionsvernetzter Siliconelastomere und Verbundmaterialien.

Bekanntermaßen ist die Haftung additionsvernetzter Siliconelastomere auf zahlreichen Substraten, wie Kunststoffen, Metallen und Gläsern, gering oder häufig wird sogar eine spontane Ablösung des Siliconelastomers vom Substrat festgestellt. Da in zahlreichen Anwendungen jedoch eine feste und dauerhafte Substrathaftung des Siliconelastomers von entscheidender Bedeutung ist, wurde eine Vielzahl spezieller Maßnahmen vorgeschlagen, um eine feste Verbindung zwischen Substrat und Siliconelastomer zu erzielen.

Grundsätzlich kann die Haftfestigkeit des Siliconelastomer-Substrat-Verbundes erhöht werden, indem die chemische und/oder physikalische Beschaffenheit des Substrates bzw. der Substratoberfläche vor dem Aufbringen der additionsvernetzenden Siliconelastomerzusammensetzung in geeigneter Weise verändert wird. Dies kann beispielsweise erfolgen durch die Vorbehandlung der Substratoberfläche mit haftvermittelnden Additiven (so genannte Primer), durch Plasmabehandlung der Substratoberfläche, durch Einmischen spezieller Zusätze in das Substrat, durch gezielte Einstellung der Morphologie des Substrates und durch Erhöhung der Oberflächenrauhigkeit. All diesen Maßnahmen gemein ist der Nachteil, dass zusätzliche Verfahrensschritte erforderlich werden oder spezielle Anforderungen an die Beschaffenheit des Substrates gestellt werden müssen.

Des Weiteren kann die Haftung von additionsvernetzenden Siliconelastomeren auf verschiedenen Substraten durch ein oder mehrere Additive verbessert werden, welche der unvernetzten Siliconmasse beigemischt werden. Hierzu zählen Verbindungen, die hochreaktive funktionelle Gruppen enthalten, wie beispielsweise Alkoxy-, Epoxy-, Carboxy- und Amino-Gruppen, wobei diese Gruppen zumeist so ausgewählt werden, dass der Haftvermittler sowohl mit dem Substrat als auch mit einem Siliconelastomerbestandteil zu reagieren vermag. Zwar kann durch derartige Haftvermittler auf eine Vorbehandlung des Substrates teilweise verzichtet werden, doch entspricht die erzielte Haftfestigkeit häufig nicht den gestellten Anforderungen. Auch ist eine Steigerung der Haftfestigkeit durch höhere Gehalte an diesen Haftvermittlern nur bedingt möglich, da sich die in ihm enthaltenen hochreaktiven Gruppen dann zunehmend nachteilig auf die Gebrauchseigenschaften, wie beispielsweise Lagerstabilität, Vernetzungscharakteristik (Inhibierung) und toxikologische Unbedenklichkeit auswirken. Daher gibt es Bestrebungen den Gehalt an Haftvermittlern so niedrig wie möglich zu halten.

Die Patentschrift EP 0 875 536 A2 beschreibt eine selbsthaftende additionsvernetzende Siliconkautschukmischung, die sich dadurch auszeichnet, dass der SiH-Vernetzer a) mindestens 20 SiH-Gruppen enthält (übrige Reste sind aliphatisch gesättigt),
ein epoxyfunktionelles Alkoxysilan und/oder Alkoxysiloxan d)enthalten ist,
optional ein Peroxid g) enthalten ist.
Besonders bevorzugt ist dabei die Verwendung des Glycidyloxypropyltrimethoxysilans (Glymo). Die in der Patentschrift EP 0 875 536 A2 beschriebene Siliconkautschukmischung eignet sich besonders zur Herstellung von Verbundformteilen, die aus dem Siliconelastomer und einem organischen Kunststoff bestehen. Die hier beschriebene Zusammensetzung weist jedoch den Nachteil auf, dass nur bei Verwendung sehr SiH-reicher Vernetzer, mit durchschnittlich mindestens 20 SiH-Gruppen pro Molekül, eine ausreichende Haftfestigkeit erzielt werden kann. In den dortigen Beispielen werden sogar Vernetzer mit 30 SiH-Gruppen je Molekül verwendet. Die Verwendung derart hochfunktioneller Vernetzer vermindert die Lagerstabilität additionsvernetzender Siliconkautschukmischungen erheblich, d.h., die Fließfähigkeit wird massiv beeinträchtigt, was bis zur Verstrammung der Masse führen kann, wodurch eine ordnungsgemäße Verarbeitung der Masse, z.B. im Spritzguss, nicht mehr möglich ist. Zudem müssen, um eine hohe Haftfestigkeit zu erzielen, relativ hohe Mengen an epoxyfunktionellem Alkoxysilan/-siloxan eingesetzt werden, wodurch die Vernetzungsgeschwindigkeit erheblich vermindert wird. Zwar kann dies teilweise durch Verwendung eines Peroxids, wie in der Patentschrift EP 0 875 536 A2 beschrieben, kompensiert werden, doch kommen hierfür wegen der notwendigerweise niedrigen Vernetzungstemperatur (Erweichung des organischen Kunststoffes) nur Peroxide mit niedriger Anspringtemperatur, wie das beschriebene 2,4-Dichlorbenzoylperoxid, in Frage, die zum einen wegen der freigesetzten Spalt- und Folgeprodukte toxikologisch sehr bedenklich sind (PCB-Problematik), zum anderen die Lagerstabilität der Masse weiter verschlechtern. Die Nachteile durch die Verwendung von epoxyfunktionellen Alkoxysilanen/siloxanen sind die Abspaltung der Alkoholgruppe(n), die Verwendung von reaktiven und polaren Gruppen und im Falle der funktionellen Alkoxysilane das Problem der "Ausblühungen" und des "Ausschwitzen". Die Abspaltung des Alkohol kann zum einen abträglich für eine gute Haftung sein, da der Alkohol sich an der Oberfläche des Silicons anreichert und damit auch an der Fläche zum Substrat, wodurch der Kontakt zwischen Silicon und Oberfläche verschlechtert wird und zum anderen werden bevorzugt Methoxysilane eingesetzt, welche das als giftig eingestufte Methanol freisetzen. Des Weiteren wird durch das frei werden von flüchtigern Spaltprodukten (Alkoholabspaltung) eine nicht unerhebliche Schrumpfung am Siliconelastomer beobachtet, die in der Regel unerwünscht ist.

Die Verwendung der reaktiven Epoxid- beziehungsweise AlkoxyGruppen führt aufgrund ihrer Polarität zu einer thixotropen, gegebenenfalls nicht mehr fließfähigen, Siliconkautschukzusammensetzung und zum anderen können die reaktiven Gruppen bereits bei der Lagerung abreagieren und so für den Haftungsaufbau nicht mehr zur Verfügung stehen. Werden funktionelle Alkoxysilane verwendet, so wandern die bei der Vernetzung nicht abreagierten Silan-Moleküle mit der Zeit an die Oberfläche des Siliconelastomers und hydrolisieren und kondensieren dort zu Silsequioxanen, was sich als Ausblühungen an der Oberfläche zeigt und zu einer Trübung des Elastomers führt. Zudem führen diese, da sie an die Oberfläche wandern, beim Spritzguss zu Formablagerungen, was einen erhöhten Reinigungsaufwand und längere Standzeiten der Spritzgussanlage bedingt.

Die deutsche Patentanmeldung DE 102 04 893 A1 beschreibt selbsthaftende additionsvernetzende Siliconmischungen, die sich dadurch auszeichnen, dass diese Mischung mindestens ein Organohydrogensiloxan b) als Vernetzer enthält, welches folgende Bedingungen erfüllen muss. i) eines der Organohydrogensiloxane enthält mehr als 7 mmol SiH/g und ii) eines der Organohydrogensiloxane weist mindestens eine aromatische Gruppe im Molekül auf, und iii) i) und ii) können im selben Organohydrogensiloxan oder in verschiedenen Organohydrogensiloxanen verwirklicht sein. Trotz dieses speziellen Vernetzers b) wird für eine gute Haftung noch mindestens ein Alkoxysilan und/oder Alkoxysiloxan, benötigt, welches jeweils mindestens noch eine Epoxygruppe aufweist. Damit bestehen auch hier die bereits beschriebenen Probleme mit den Alkoxy-/Epoxy-Haftvermittlern.

Die Patentschrift EP 0 686 671 A2 beschreibt eine selbsthaftende additionsvernetzende Masse, die keine speziellen Haftvermittler verwendet, da der haftvermittelnde Bestandteil entweder ein Organohydrogenpolysiloxan ist, welches durchschnittlich pro Molekül mindestens zwei SiH-Gruppen besitzt und dessen monovalente Si-gebundene Reste zu mindestens 12 Mol.-% aus Kohlenwasserstoffresten mit einem aromatischen Ring bestehen (es wird ausdrücklich darauf hingewiesen, dass keine zufrieden stellende Haftung erzielt wird, wenn der Gehalt des aromatischen Ring tragenden organischen Rests unter 12 Mol-% liegt), oder eine solche Verbindung ist, die durchschnittlich pro Molekül mindestens eine SiH-Gruppe besitzt und die eine Gruppe bestehend aus zwei aromatischen Ringen enthält, wobei die beiden aromatischen Ringe durch -R¹³R¹⁴Si-, -R¹³R¹⁴SiO-, - OR¹³R¹⁴SiO- oder -R¹³R¹⁴SiOR¹³R¹⁴Si- voneinander getrennt sind und die Reste R¹³ und R¹⁴ einwertige Kohlenwasserstoffreste darstellen. Der haftvermittelnde Bestandteil kann also zugleich der Vernetzer der Siliconelastomermasse sein. Mit dieser Zusammensetzung wird eine gute Haftung auf organischen Kunststoffen, insbesondere Acrylnitril-Butadien-StyrolCopolymer (ABS) erzielt, aber gleichzeitig eine leichte Entformbarkeit von Metallen zeigt. Der hohe Gehalt an aromatische Ringe enthaltenden Resten in dem SiH-haltigen, haftvermittelnden Bestandteil von mehr als 12 Mol.-% bedingt jedoch eine erhebliche Unverträglichkeit mit den übrigen Bestandteilen der additionsvernetzenden Siliconelastomermasse. Dies führt einerseits zu einer teilweisen Entmischung (Ausschwitzen) während der Lagerung, was ein wiederholtes Homogenisieren der diesen Bestandteil enthaltenden Komponente vor Gebrauch erforderlich macht. Diese Unverträglichkeit, die sich bereits an einer milchigen Trübung der unvernetzten Masse zeigt, manifestiert sich auch in einer deutlich verminderten Transparenz der daraus hergestellten Siliconelastomerteile. Fungiert der haftvermittelnde Bestandteil zugleich als Vernetzer der Siliconelastomerzusammensetzung, führt die Unverträglichkeit zu Vulkanisationsstörungen, die zu inhomogener Netzwerkbildung und mangelhaften mechanischen Vulkanisateigenschaften führen. Um diese Vulkanisationsstörungen zu umgehen, muss zusätzlich zum haftvermittelnden SiH-haltigen Bestandteil ein mit der Siliconelastomermasse vollständig verträglicher SiH-haltiger Vernetzer eingesetzt werden, was allerdings andere Nachteile, beispielsweise erhöhte Werte des Druckverformungsrestes und erhöhte Ausschwitztendenz des haftvermittelnden Bestandteils, zur Folge hat. Der hohe Gehalt an aromatischen Ringen enthaltenden Resten in dem SiH-haltigen, haftvermittelnden Bestandteil von mehr als 12 Mol.-% verursacht auch eine erhebliche Strukturviskosität und Thixotropie der Siliconelastomermasse, die in zahlreichen Anwendungen, beispielsweise Spritzguss von Flüssigsiliconkautschuk, unerwünscht ist.
In der Patentschrift EP 0 728 825 B1 werden selbsthaftende Siliconkautschuke beschrieben, welche als Vernetzer R₃Si(OSi(R)H)ₙOSiR₃, -(OSi(R)H)ₙ- oder R₄₋₁ Si(OSi(R)₂H)₁ mit n mindestens 3 und 1 = 3 oder 4 und einen speziellen Haftvermittler enthalten. Bei diesem handelt es sich um ein Molekül, welches mindestens eine aliphatisch ungesättigten Gruppe und mindestens zwei Phenylengruppen enthält.

Die Patentschrift EP 1 106 662 B1 beschreibt selbsthaftende additionsvernetzende Massen, die durch einen synergetischen Effekt aus der Kombination von einem speziellen Si-H-Vernetzer (B) und einer Organosiliciumverbindung (C), mit Epoxidgruppen und hydrolisierbaren Gruppen, eine gute Haftung ermöglichen. Diese Patentschrift bietet zwar eine Lösung hinsichtlich des Vernetzers an, weist aber immer noch Nachteile hinsichtlich des haftvermittelnden Additivs (C) auf.

Zusammenfassend kann festgestellt werden, dass keine der herkömmlichen additionsvernetzenden Siliconelastomerzusammensetzungen in befriedigender Weise den Anforderungen gerecht wird, die an eine selbsthaftende Siliconelastomermasse, welche insbesondere zur Herstellung von Verbundformteilen oder zum Verguss elektrischer/elektronischer Teile Verwendung finden soll, gestellt werden, nämlich:
a) gute Fließfähigkeit (kein oder nur sehr geringe Thixotropie) und gute Lagerstabilität
b) hohe Vernetzungsgeschwindigkeit bei relativ niedrigen Temperaturen
c) hohe Haftfestigkeit auf organischen Kunststoffen und Metallen
d) hohe Haftfestigkeit auch nach Lagerung der unvernetzten Komponenten und anschließender Verarbeitung
e) hohe Haftfestigkeit des Verbunds auch nach dessen Lagerung
f) toxikologische Unbedenklichkeit bzw. Eignung für die Verwendung im Lebensmittel- oder lebensmittelnahen Bereich.
g) hohes Niveau der Gebrauchseigenschaften (Transparenz, Nichtkorrosivität, mechanisches Eigenschaftsprofil)
h) keine oder nur sehr geringe Formablagerungen in Spritzgussform,
i) nur geringen Schrumpf der Elastomerteile beim Spritzguss.

Es bestand daher die Aufgabe, eine auf organischen Kunststoffen und Metallen gut selbsthaftende additionsvernetzende Siliconelastomermasse bereitzustellen, die obige Nachteile nicht aufweist bzw. dem voranstehenden Anforderungsprofil gerecht wird. Überraschend wurden mit den erfindungsgemäßen Zusammensetzungen diese Anforderungen erfüllt.

Diese Aufgabe wurde gelöst durch die erfindungsgemäße selbsthaftende additionsvernetzende Zusammensetzung, deren gute selbsthaftende Eigenschaft durch die Kombination von SiH-haltigen Vernetzern mit SiH-haltigen Oligosiloxanen erzielt wird.

Gegenstand der Erfindung sind selbsthaftende additionsvernetzende Siliconzusammensetzungen, enthaltend
(A) mindestens ein Diorganopolysiloxan der allgemeinen Formel (1)

   R¹ₐR²_{b}SiO_{(4-a-b)/2} (1),

   in der
   - R¹: Hydroxylrest oder einen monovalenten, gegebenenfalls halogensubstituierten, gegebenenfalls O-, N-, S-, oder P-Atome enthaltenden Kohlenwasserstoffrest mit 1 bis 20 Kohlenstoffatomen, der frei von aliphatisch ungesättigten Gruppen ist,
   - R²: einen monovalenten, aliphatisch ungesättigten, gegebenenfalls halogensubstituierten, gegebenenfalls O-, N-, S-, oder P-Atome enthaltenden Kohlenwasserstoffrest mit 2 bis 10 Kohlenstoffatomen,
   - b: Werte von 0,0003 bis 2 bedeuten,
   mit der Maßgabe, dass 1,5<(a+b)≤3,0, dass pro Molekül durchschnittlich mindestens zwei aliphatisch ungesättigte Reste R² enthalten sind und dass die bei 25°C bestimmte Viskosität der Diorganopolysiloxane (A) 1 mPa.s bis 40 000 Pa.s beträgt,
(B) mindestens ein Organohydrogenpolysiloxan der allgemeinen Formel (2)

   R³_{c}R⁴_{d}R⁵ₑH_{f}SiO_{(4-c-d-2e-f)/2} (2),

   wobei
   - R³: einen monovalenten aliphatisch gesättigten Kohlenwasserstoffrest mit 1 bis 10 Kohlenstoffatomen,
   - R⁴: (a) einen gegebenenfalls halogensubstituierten monovalenten Kohlenwasserstoffrest mit 6 bis 20 Kohlenstoffatomen, welcher mindestens einen aromatischen C₆-Ring enthält, oder/und (b) einen halogensubstituierten, gegebenenfalls O- oder N-Atome enthaltenden gesättigten monovalenten Kohlenwasserstoffrest mit 2 bis 20 Kohlenstoffatomen,
   - R⁵: einen beidseitig Si-gebundenen bivalenten, gegebenenfalls halogensubstituierten, gegebenenfalls O-, N-, S-, oder P-Atome enthaltenden Kohlenwasserstoffrest mit 6 bis 24 Kohlenstoffatomen,
   c und f positive Zahlen und
   d und e Null oder eine positive Zahl
   bedeuten, mit der Maßgabe, dass d und e nicht gleichzeitig Null sein dürfen und dass die bei 25°C bestimmte Viskosität des Organohydrogenpolysiloxans (B) 5 mPa.s bis 5 Pa.s beträgt,
(C) mindestens ein Organohydrogenoligosiloxan der allgemeinen Formel (3), (4), (5), (6) oder (7)

   (R⁶HSiO)ₙ (3),

   (R⁶₃Si-O-(R⁶HSiO)ₘ-SiR⁶₃ (4),

   (HR⁶₂Si-O-(R⁶HSiO)ₘ-SiHR⁶₂ (5),

   (R⁶3Si-O-R62 SiO)p(R6HSiO)o-SiR63 (6),

   (HR⁶₂Si-O-( R⁶₂ SiO)ₚ(R⁶HSiO)ₒ-SiHR⁶₂ (7),

   wobei
   - R⁶: einen monovalenten, gegebenenfalls halogensubstituierten, Kohlenwasserstoffrest mit 1 bis 10 Kohlenstoffatomen,
   - n: 4, 5, 6 , 7, 8,
   - m: 4, 5, 6,
   - o: 3, 4, 5, und
   - p: 3, 4, 5
   bedeuten,
   mit der Maßgabe, dass o ≥ p ist und
(D) mindestens einen Hydrosilylierungskatalysator.

Organohydrogenpolysiloxan (B) und Organohydrogenoligosiloxan (C) fungieren als Vernetzer und zugleich völlig überraschend in synergistischer Weise als Haftvermittler.

Die vorteilhaften Eigenschaften der Siliconzusammensetzungen bestehen darin, dass die Selbsthaftung durch einen ohnehin in additionsvernetzenden Massen enthaltenen Bestandteil, nämlich den SiH-haltigen Vernetzer (B), in Kombination mit der Verbindung (C), erzielt wird, wobei der SiH-Vernetzer (B) lediglich einige Gruppen enthalten muss, welche die Verträglichkeit mit den übrigen Bestandteilen der Masse (vor allem mit dem Diorganopolysiloxan) herabsetzen. Diese Gruppen stellen zudem keine reaktiven funktionellen Gruppen dar, wodurch die toxikologische Unbedenklichkeit der Masse (beispielsweise Trinkwasserzulassung; BfR/FDA-Zulassung) bewahrt bleibt, keine Vulkanisationsstörungen auftreten, ausreichende Lagerstabilität gegeben ist, die Transparenz des vernetzten Siliconelastomers bewahrt bleibt und keine ausgasenden, ausschwitzenden oder extrahierbaren Bestandteile zugesetzt werden. Die Kombination des vermindert verträglichen SiH-Vernetzers (B) mit Organohydrogenoligosiloxan (C) macht es möglich, den Gehalt an unverträglichen Gruppen im SiH-Vernetzer niedrig zu halten. Erst die Kombination beider Bestandteile (B) und (C)führt zur Synergie der Selbsthaftungseffekte dieser beiden Bestandteile.

Insbesondere zeichnet sich die vorliegende Zusammensetzung dadurch aus, dass
a) die Vernetzungsgeschwindigkeit nicht vermindert wird, bzw. teilweise sogar erhöht wird,
b) keine nachteiligen Veränderungen der mechanischen Elastomereigenschaften in Kauf genommen werden müssen,
c) die haftvermittelnden Bestandteile (B) und (C) zugleich als Vernetzer fungieren (kein zusätzlicher SiH-Vernetzer erforderlich),
d) auch auf Metallen eine starke Selbsthaftung erzielt werden kann, ohne die Entformbarkeit aus metallenen Vulkanisationsformen zu verhindern (es zeigt sich, dass die Haftung auf Metall kurz nach der Vernetzung eine Entformung des Siliconelastomerteiles erlaubt; wird der Siliconelastomer -Metall-Haftverbund jedoch gelagert, wächst das Siliconelastomer innerhalb kurzer Zeit fest und dauerhaft auf die Metalloberfläche auf),
e) die Fließfähigkeit der unvernetzten Masse kaum beeinträchtigt wird,
f) die Transparenz nicht durch zusätzliche Haftvermittler herabgesetzt wird,
g) keine ggf. toxische Spaltprodukte freigesetzt werden,
h) keine flüchtigen Bestandteile den Schrumpf negativ beeinflussen,
i) die erhaltenen Elastomere für Lebensmittelnahe und medizinische Anwendungen geeignet sind.

Der haftvermittelnde Bestandteil (B) der vorliegenden Erfindung weist zwar auch eine verminderte Verträglichkeit mit den übrigen Bestandteilen der Masse auf, was an einer Trübung beim Einmischen erkennbar ist, doch verschwindet diese Trübung vollständig, sobald die Masse zum Zwecke der Vernetzung erwärmt wird; dies indiziert eine homogene Verteilung der Vernetzermoleküle in der Masse zum Zeitpunkt der Vernetzung.

Wenn der haftvermittelnde SiH-haltige Bestandteil (B) in mindestens 12 Mol.-% der Reste Phenylgruppen enthält, bleibt hingegen diese Trübung auch bei üblichen Vernetzungstemperaturen bestehen und indiziert eine inhomogene Netzwerkbildung, was anhand der optischen Eigenschaften, der Vernetzungscharakteristik und der mechanischen Eigenschaften auch belegt werden kann.

Die Komponenten (A), (B) und (C) können eine Verbindung oder eine Mischung verschiedener Verbindungen enthalten.

Beispiele für die Reste **R¹** sind Alkylreste, wie Methyl-, Ethyl-, Propyl-, Isopropyl-, tert.-Butyl-, n-Pentyl-, iso-Pentyl-, neo-Pentyl-, tert.-Pentyl-, n-Octyl-, 2-Ethylhexyl-, 2,2,4-Trimethylpentyl-, n-Nonyl- und Octadecylrest; Cycloalkylreste, wie Cyclopentyl-, Cyclohexyl-, Cycloheptyl-, Norbornyl-, Adamantylethyl- oder Bornylrest; Aryl- oder Alkarylreste, wie Phenyl-, Ethylphenyl-, Tolyl-, Xylyl-, Mesityl- oder Naphthylrest; Aralkylreste, wie Benzyl-, 2-Phenylpropyl- oder Phenylethylrest, sowie halogenierte und mit organischen Gruppen funktionalisierte Derivate der voranstehenden Reste, wie 3,3,3-Trifluorpropyl-, 3-Iodopropyl-, 3-Isocyanatopropyl-, Aminopropyl-, Methacryloxymethyl- oder Cyanoethylrest. Bevorzugte Reste **R¹** enthalten 1 bis 10 Kohlenstoffatome sowie gegebenenfalls Halogensubstituenten. Besonders bevorzugte Reste **R¹** sind Methyl-, Phenyl- und 3,3,3-Trifluorpropylrest, insbesondere der Methylrest.

Die Reste **R²** sind einer Hydrosilylierungsreaktion zugänglich. Beispiele hierfür sind Alkenyl- und Alkinylreste, wie Vinyl-, Allyl-, Isopropenyl-, 3-Butenyl-, 2,4-Pentadienyl-, Butadienyl-, 5-Hexenyl-, Undecenyl-, Ethinyl-, Propinyl- und Hexinylrest; Cycloalkenylreste, wie Cyclopentenyl-, Cyclohexenyl-, 3-Cyclohexenylethyl-, 5-Bicycloheptenyl-, Norbornenyl-, 4-Cyclooctenyl- oder Cyclooctadienylrest; Alkenylarylreste, wie Styryl- oder Styrylethylrest, sowie halogenierte und Heteroatome enthaltende Derivate der voranstehenden Reste, wie 2-Bromvinyl-, 3-Brom-1-propinyl-, 1-Chlor-2-methylallyl-, 2-(Chlormethyl)allyl-, Styryloxy-, Allyloxypropyl-, 1-Methoxyvinyl-, Cyclopentenyloxy-, 3-Cyclohexenyloxy-, Acryloyl-, Acryloyloxy-, Methacryloyl- oder Methacryloyloxyrest. Bevorzugte Reste **R²** sind Vinyl-, Allyl- und 5-Hexenylrest, insbesondere der Vinylrest.

Bei den Diorganopolysiloxanen (A) der allgemeinen Formel (1) beträgt die bei 25°C bestimmte Viskosität vorzugsweise 100 mPa.s bis 30 000 Pa.s. Besonders bevorzugt ist der Viskositätsbereich von 1 bis 30 000 Pa.s. Je nach Art der additionsvernetzenden Masse, werden unterschiedliche Viskositätsbereiche besonders bevorzugt. Für die als RTV-2 (kaltvulkanisierende Siliconkautschuke) bekannten Massen werden Viskositäten von 100 bis 10 000 mPa.s besonders bevorzugt, für LSR (Flüssigsilikonkautschuke) von 1 bis 100 Pa.s, für HTV (heißvulkanisierende Silikonkautschuke) von 2 000 bis 40 000 Pa.s.
Beispiele für **R³** sind Alkylreste, wie Methyl-, Ethyl-, Propyl-, Isopropyl-, tert.-Butyl-, n-Octyl-, 2-Ethylhexyl- und Octadecylrest, sowie Cycloalkylreste, wie Cyclopentyl-, Cyclohexyl-, Norbornyl- oder Bornylrest. Bevorzugte Reste **R³** sind Kohlenwasserstoffreste mit 1 bis 10 Kohlenstoffatomen Besonders bevorzugter Rest **R³** ist der Methylrest.

Beispiele für **R⁴** sind der Phenyl-, Tolyl-, Xylyl-, Biphenylyl-, Anthryl-, Indenyl-, Phenanthryl-, Naphthyl-, Benzyl-, Phenylethyl- oder Phenylpropylrest, sowie halogenierte und mit organischen Gruppen funktionalisierte Derivate der voranstehenden Reste, wie o-, m-, p-Chlorphenyl-, Pentafluorphenyl-, Bromtolyl-, Trifluortolyl-, Phenoxy-, Benzyloxy-, Benzyloxyethyl-, Benzoyl-, Benzoyloxy-, p-tert.-Butylphenoxypropyl-, 4-Nitrophenyl-, Chinolinyl- oder Pentafluorbenzoyloxyrest.

Beispiele für Kohlenwasserstoffreste **R⁴** (b) mit 2 bis 20 Kohlenstoffatomen sind solche wie 3-Chlorpropyl-, 3-Brompropyl-, 3,3,3-Trifluorpropyl-, 2-Fluorethyl-, 1,1-Dihydroperfluordodecyl- oder der 2-Cyanoethylrest. Bevorzugte Reste **R⁴** sind der Phenylrest und der 3,3,3-Trifluorpropylrest. Besonders bevorzugter Rest **R⁴** ist der Phenylrest.

Bevorzugte Reste **R⁵,** entsprechen der allgemeinen Formel (6)

-(O)ₛ-(R⁷)ₜ-(O)ᵤ-(X)_{w}-(O)ᵤ-(R⁷)ₜ-(O)ₛ-, (6)

,
wobei
**s, t, u** und **w** unabhängig voneinander die Werte 0, 1 oder 2, **R⁷** gleich oder verschieden sein können und einen bivalenten, gegebenenfalls halogensubstituierten, gegebenenfalls O-, N-, S-, oder P-Atome enthaltenden Kohlenwasserstoffrest, der frei ist von aliphatisch ungesättigten Gruppen und 1 bis 10 Kohlenstoffatome enthält, wie -CH₂-, -CH₂-CH₂-, -CH₂-CH₂-CH₂-, -CF₂-, -CH₂-CF₂-, -CH₂-CH(CH₃)-, -C(CH₃)₂-, -CH₂-C(CH₃)₂-, - C(CH₃)₂-CH₂-, -CH₂-CH₂-O- oder -CF₂-CF₂-O-, **-(X)-** einen bivalenten Rest, welcher ausgewählt wird aus -Ph-, -Ph-O-Ph-, -Ph-S-Ph-, -Ph-SO₂-Ph-, -Ph-C(CH₃)₂-Ph-, -Ph-C(CF₃)₂-Ph-, -Ph-C(O)-Ph-, Cyclohexylen oder Norbornylen, wobei -Ph- eine Phenylengruppe bezeichnet, bedeuten.

Besonders bevorzugter Rest **R⁵** ist der Phenylenrest.

Das Organohydrogenpolysiloxan (B) enthält pro Molekül mindestens 2 SiH-Gruppen, vorzugsweise mindestens 5. Eine weitere bevorzugte Ausführungsform enthält 5 bis 18 SiH-Gruppen pro Molekül. Die bei 25°C gemessene Viskosität des Bestandteils (B) beträgt vorzugsweise 5 mPa.s bis 1 Pa.s.

Aufgrund der Labilität der SiH-Gruppe kann der Bestandteil (B) herstellungsbedingt einen geringen Gehalt, typischerweise <100 Gew.-ppm, Si-gebundener OH-Gruppen aufweisen.

Beispiele für Kohlenwasserstoffreste **R⁶** sind Alkylreste, wie Methyl-, Ethyl-, n-Propyl-, Isopropyl-, tert.-Butyl-, n-Pentyl-, iso-Pentyl-, neo-Pentyl-, tert.-Pentyl-, n-Octyl-, 2-Ethylhexyl-, 2,2,4-Trimethylpentyl- und n-Nonylrest; Arylreste, wie Phenyl-, Ethylphenyl-, Tolyl-, Xylyl-, Mesityl- oder Naphthylrest; Aralkylreste, wie Benzyl-, Phenylethyl- oder Phenylpropylrest; sowie halogensubstituierte oder Heteroatome enthaltende Derivate der voranstehenden Reste, wie 3-Chlorpropyl-, 3-Brompropyl-, (p-Chlormethyl)phenyl-, (p-Chlormethyl)phenethyl-, Hydroxymethyl-, Hydroxyethyl-, Hydroxypropyl-, Hydroxybutyl, 3,3,3-Trifluorpropyl-, Acetyl-, Acetoxymethyl-, Acetoxyethyl-, Acetoxypropyl-, 3-Phenoxypropyl-, Benzoyloxypropylrest. Bevorzugte Reste **R⁶** sind Methyl-, Ethyl-, Propyl-, Butyl-, Octyl-, Phenyl- und 3,3,3-Trifluorpropylrest. Besonders bevorzugte Reste **R⁶** sind Methyl-, und Phenylrest, wobei hiervon die Methylgruppe der besonders bevorzugte Rest ist.

Beim Organohydrogenoligosiloxan (C) handelt es sich bevorzugt um Verbindungen der Formeln (3) und (5) und besonders bevorzugt um Verbindungen der Formel (3). Für Verbindung der Formel (3) sind Werte für n von 4 bis 6 bevorzugt und besonders bevorzugt ist 5 und 6, da damit die Formklebrigkeit niedriger ist, als mit n gleich 4 und die Haftung zugleich optimiert wird. Bei n größer 8 wird die Haftung wiederum wesentlich verschlechtert und der synergetische Effekt von (B) und (C) bzgl. Haftung kann nicht mehr beobachtet werden.

Auf 100 Gew.-Teile Diorganopoylsiloxan (A) werden 0,1 bis 30 Gew.-Teile, vorzugsweise 0,5 bis 10 Gew.-Teile insbesondere 1 bis 5 Gew.-Teile Organohydrogenpolysiloxan (B) eingesetzt. Vom Organohydrogenoligosiloxan (C) werden üblicherweise von 0,02 bis 9 Gew.-Teile, vorzugsweise 0,1 bis 3 Gew.-Teile und insbesondere 0,1 bis 1,0 Gew.-Teile verwendet. Liegt der Gehalt an Organohydrogenoligosiloxan (C) unter den 0,02 Gew.-Teile, so wird der synergistische Effekt nicht beobachtet. Der volle Effekt wird ab einem Gehalt an 0,1 Gew.-Teile beobachtet. Bei Gehalten über 9 Gew.-Teile wird der synergistische Effekt, abhängig vom Verhältnis von (B) und (C), wieder wesentlich schwächer. Zudem ist es dann kaum mehr möglich Siliconelastomere mit höheren Shore A-Härten (über 45) zu erhalten. Außerdem nimmt mit zunehmendem Gehalt an Organohydrogenoligosiloxan (C) die Formklebrigkeit, die sich negativ auf die Verarbeitung auswirkt, zu.

Das Verhältnis der Gesamtmenge an Si-H-Gruppen zur Gesamtmenge der Si-Vinylgruppen kann in Bereichen von 0,5 bis 15 variieren, wobei 1,0 bis 7 bevorzugt ist und 1,2 bis 4,5 besonders bevorzugt ist.

Hydrosilylierungskatalysator (D) dient als Katalysator für die als Hydrosilylierung bezeichnete Additionsreaktion zwischen den aliphatisch ungesättigten Kohlenwasserstoffresten **R²** der Diorganopolysiloxane (A) und den siliciumgebundenen Wasserstoffatomen der Organohydrogenpolysiloxane (B) und der Organohydrogenoligosiloxane (C). In der Literatur sind zahlreiche geeignete Hydrosilylierungskatalysatoren beschrieben. Prinzipiell können alle dem Stand der Technik entsprechenden und in additionsvernetzenden Siliconkautschukmassen eingesetzten Hydrosilylierungskatalysatoren verwendet werden.

Als Hydrosilylierungskatalysator (D) können Metalle und deren Verbindungen, wie Platin, Rhodium, Palladium, Ruthenium und Iridium, vorzugsweise Platin und Rhodium, eingesetzt werden. Die Metalle können gegebenenfalls auf feinteiligen Trägermaterialien, wie Aktivkohle, Metalloxiden, wie Aluminiumoxid oder Siliciumdioxid, fixiert sein. Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl₂.Olefin)₂ und H(PtCl₃.Olefin) verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Auch Platin-Katalysatoren mit Phosphor-, Schwefel- und Aminliganden können verwendet werden, z.B. (Ph₃P)₂PtCl₂. Besonders bevorzugt sind Komplexe des Platins mit Vinylsiloxanen, wie sym-Divinyltetramethyldisiloxan.

Die Menge des eingesetzten Hydrosilylierungskatalysators (D) richtet sich nach der gewünschten Vernetzungsgeschwindigkeit sowie ökonomischen Gesichtpunkten. Üblicherweise werden pro 100 Gew.-Teile Diorganopolysiloxane (A) 1 x 10⁻⁵ bis 5 x 10⁻² Gew.-Teile, vorzugsweise 1 x 10⁻⁴ bis 1 x 10⁻² und insbesondere 5 x 10⁻⁴ bis 5 x 10⁻³ Gew.-Teile Platin-Katalysatoren, berechnet als Platin-Metall eingesetzt.

Die selbsthaftenden additionsvernetzenden Siliconzusammensetzungen können gegebenenfalls weitere Bestandteile (E), enthalten ausgewählt aus der Gruppe enthaltend Inhibitoren, Stabilisatoren, Katalysatoren, Füllstoffe, wie verstärkende und nicht verstärkende Füllstoffe, Weichmacher, Haftvermittler, lösliche Farbstoffe, anorganische und organische Pigmente, Lösungsmittel, Fungicide, Duftstoffe, Dispergierhilfsmittel, rheologische Additive, Korrosionsinhibitoren, Oxidationsinhibitoren, Lichtschutzmittel Hitzestabilisatoren, flammabweisend machende Mittel und Mittel zur Beeinflussung der elektrischen Eigenschaften.

Um eine ausreichend hohe mechanische Festigkeit des vernetzten Siliconkautschuks zu erzielen, ist es bevorzugt, aktiv verstärkende Füllstoffe als Bestandteil (F) in die additionsvernetzenden Siliconzusammensetzungen einzuarbeiten. Als aktiv verstärkende Füllstoffe (F) werden vor allem gefällte und pyrogene Kieselsäuren, sowie Gemische derselben verwendet. Die spezifische Oberfläche dieser aktiv verstärkenden Füllstoffe sollte mindestens 50 m²/g betragen oder vorzugsweise im Bereich von 150 bis 400 m²/g gemäß der Bestimmung nach der BET-Methode liegen. Derartige aktiv verstärkende Füllstoffe sind auf dem Gebiet der Siliconkautschuke sehr gut bekannte Materialien.

Die Compoundierung der selbsthaftenden additionsvernetzenden Siliconzusammensetzungen erfolgt durch Mischen der oben aufgeführten Komponenten in beliebiger Reihenfolge.

Die Vernetzung der selbsthaftenden additionsvernetzenden Siliconzusammensetzungen zu Siliconelastomeren und Verbundmaterialien erfolgt vorzugsweise durch Erwärmen, vorzugsweise bei 40 bis 250°C, bevorzugt bei mindestens 50°C, insbesondere bei mindestens 80°C, bevorzugt bei höchstens 200°C, insbesondere bei höchstens 180°C.

Gegenstand der Erfindung sind auch die additionsvernetzten Siliconelastomere und Verbundmaterialien.

Beim Verfahren zur Herstellung von Verbundmaterialien wird die Siliconzusammensetzung auf das Substrat aufgebracht und anschließend vorzugsweise durch Erwärmen auf 40 bis 250°C zu einem Verbundmaterial vernetzt.

Die selbsthaftenden additionsvernetzenden Siliconzusammensetzungen können insbesondere überall dort mit Vorteil eingesetzt werden, wo eine gute Haftfestigkeit zwischen dem additionsvernetzten Siliconelastomer und einem Substrat, vorzugsweise bestehend aus organischen Kunststoffen, Metallen oder Gläsern, erwünscht wird. Das Substrat kann als Formteil, Folie oder Beschichtung vorliegen. Die selbsthaftenden additionsvernetzenden Siliconzusammensetzungen eignen sich zur Herstellung von Verbundmaterial durch Beschichten, Verkleben, Vergießen und zur Herstellung von Formartikeln. Insbesondere eignen sich die selbsthaftenden additionsvernetzenden Siliconzusammensetzungen zum Verguss und zum Verkleben elektrischer und elektronischer Teile sowie zur Herstellung von Verbundformteilen. Unter Verbundformteilen wird hier ein einheitlicher Formartikel aus einem Verbundmaterial verstanden, der aus einem aus den Siliconzusammensetzungen hergestelltem Siliconelastomerteil und mindestens einem Substrat so zusammengesetzt ist, dass zwischen beiden Teilen eine feste, dauerhafte Verbindung besteht. Vorzugsweise erfolgt die Herstellung eines solchen Verbundformteiles, indem ein organischer Kunststoff zu einem Formartikel verarbeitet wird und anschließend die Siliconzusammensetzungen mit diesem Formteil in Verbindung gebracht und vernetzt werden, was beispielsweise im Spritzgussverfahren, mittels Extrusion oder im sog. press-moulding-Verfahren erfolgen kann. Verbundmaterialien und insbesondere Verbundformteile können in vielfältigsten Anwendungsbereichen zum Einsatz kommen, beispielsweise in der Elektronik- Haushaltgeräte-, Gebrauchsgüter-, Bau- und Automobilindustrie, in der Medizintechnik, der Sport- und Freizeitartikelherstellung.

### Beispiele

In den nachfolgenden Beispielen sind, falls jeweils nicht anders angegeben,
alle Drücke 0,10 MPa (absolut);
alle Temperaturen 23°C .

### Substrate

Die Haftung der erfindungsgemäßen sowie nicht erfindungsgemäßen additionsvernetzten Siliconelastomere wurde auf folgenden Substraten getestet:
a) PBT (Polybutylenterephthalat): Ultradur® B4300G6 der Firma BASF AG, Ludwigshafen, Deutschland; 30% Glasfaserverstärkt (GF)
b) PBT: Pocan® B3235 der Firma Bayer AG, Leverkusen, Deutschland; 30% (GF)
c) Polyamid 6: Durethan® BKV 30 der Firma Bayer AG, Leverkusen, Deutschland; 30% (GF)
d) Aluminium (Industriequalität; nicht grundiert)
e) Stahl: VA-Stahl (Industriequalität)

### Charakterisierung der Haftung

In eine Edelstahlpressform wird ein Substratstreifen der Abmessungen 60x25x2mm eingelegt und die Form mit der zu testenden additionsvernetzenden Siliconelastomermasse gefüllt. Um zu verhindern, dass sich das Siliconelastomer bei den Zugversuchen zu stark dehnt wird ein Textilband in das Siliconelastomer einvernetzt. Die Pressvulkanisation erfolgt während 3 min bei einer Temperatur von 170°C und einer Druckkraft von 30 to. Nach Entnahme des Laminates und Lagerung von mindestens 16 Stunden bei Raumtemperatur wird der starre Substratkörper fest eingespannt und die maximale Trennkraft bestimmt, die notwendig ist, den anhaftenden Siliconelastomerstreifen im Schälversuch abzulösen. Die Bestimmung der Trennkraft (TK) erfolgt in ähnlich DIN ISO 813 und wird in N/mm angegeben. Je Beispiel werden 4 Laminate gemessen, die Trennkraft als Mittelwert bestimmt und der Anteil an kohäsivem Versagen in Prozent ermittelt. Kohäsives Versagen (KV) von 0% bedeutet, dass das Siliconelastomer vollständig und rückstandsfrei von der Substartoberfläche abgelöst wurde. Kohäsives Versagen von 100% bedeutet, dass die Delaminierung ausschließlich durch Rißwachstum innerhalb des Siliconelastomers erfolgte.

### Beispiel 1 (erfindungsgemäß)

### Grundmasse 1 (GM):

In einem Laborkneter wurden 156 g eines vinyldimethylsiloxy-terminierten Polydimethylsiloxans mit einer Viskosität von 20 000 mPa*s (25°C) vorgelegt, auf 150°C aufgeheizt und mit 116 g einer hydrophoben pyrogenen Kieselsäure mit einer spezifischen Oberfläche von 300 m²/g und einem Kohlenstoffgehalt von 4,2 Gew.-% versetzt. Diese hochviskose Masse wurde anschließend mit 141 g des oben genannten Polydimethylsiloxanes verdünnt. Durch kneten unter Vakuum (10 mbar) bei 150°C wurden innerhalb einer Stunde flüchtige Bestandteile entfernt.

### Herstellung der A-Komponente:

100 g Grundmasse 1 werden mit 1,0 g eines dimethylvinylsiloxyendgestoppten Polydimethylsiloxan mit Methylvinylsiloxygruppen mit einem Vinylgehalt von 2,5 mmol/g und einer Viskosität von 350 mm²/s und 0,2 g einer Katalysatorlösung mit einem Pt-Gehalt von 1 Gew.-%, welche einen Platin-Divinyltetramethyldisiloxan-Komplex in Siliconpolymer enthält, vermischt.

### Herstellung der B-Komponente:

79,5 g Grundmasse 1 werden mit 0,1 g 1-Ethinyl-1-cyclohexanol, 15 g eines vinyldimethylsiloxy-terminierten Polydimethylsiloxans mit einer Viskosität von 20 000 mPa*s (25°C), 4,8 g eines Mischpolymerisats aus Dimethylsiloxy-, Methylhydrogensiloxy-, Phenylsiloxy- und Trimethylsiloxy-Einheiten mit einer Viskosität von 65 mm²/s und einem Si-H-Gehalt von 0,9% und 0,5 g Tetramethylcyclotetrasiloxan vermischt.

### Beispiel 2 (nicht erfindungsgemäß)

Die Herstellung von GM 1, Komponente A und B erfolgt analog Beispiel 1, mit der Ausnahme, dass in Komponente B statt 0,5 g Tetramethylcyclotetrasiloxan 0,5 g 3-Glycidoxypropyltrimethoxysilan verwendet wurde.

### Beispiel 3 (nicht erfindungsgemäß)

Die Herstellung von GM 1, Komponente A und B erfolgt analog Beispiel 1, mit der Ausnahme, dass in Komponente B anstatt 0,5 g Tetramethylcyclotetrasiloxan 0,5 g eines Mischpolymerisats aus Methylhydrogensiloxy- und Trimethylsiloxy-Einheiten mit einem mittleren Gehalt von 30 MethylSiH-O-Gruppen und einem mittleren Si-H-Gehalt von 15 mmol/g (entspricht einem Si-H-Gehalt von ca. 1,5 Gew.-%).

### Beispiel 4 (nicht erfindungsgemäß)

Die Herstellung von GM 1, Komponente A und B erfolgt analog Beispiel 1, mit der Ausnahme, dass in Komponente B anstatt 0,5 g Tetramethylcyclotetrasiloxan insgesamt 5,8 g des - in Beispiel 1 genannten - Mischpolymerisats verwendet wurde.

### Beispiel 5 (erfindungsgemäß)

Die Herstellung von GM 1, Komponente A und B erfolgt analog Beispiel 1, mit der Ausnahme, dass in Komponente B statt 0,5 g insgesamt 1,0 g Tetramethylcyclotetrasiloxan verwendet wurden.

### Beispiel 6 (erfindungsgemäß)

Die Herstellung von GM 1, Komponente A und B erfolgt analog Beispiel 1, mit der Ausnahme, dass in Komponente B statt 0,5 g Tetramethylcyclotetrasiloxan 1,0 g eines Trimethhylsiloxyendgestoppertes Si-H-Siloxan mit im Durchschnitt 5 Si-H-Gruppen verwendet wurde.

### Beispiel 7 (erfindungsgemäß)

Die Herstellung von GM 1, Komponente A und B erfolgt analog Beispiel 1, mit der Ausnahme, dass in Komponente B statt 4,8 g des Mischpolymerisats aus Dimethylsiloxy-, Methylhydrogensiloxy-, Phenylsiloxy- und Trimethylsiloxy-Endgruppen 5,2 g eines Mischpolymerisat aus Dimethylsiloxy-, Methylhydrogensiloxy-, Methylphenylsiloxy- und Trimethylsiloxy-Endgruppen mit einer Viskosität von 34 mm²/s und einem Si-H-Gehalt von 0,79 Gew.-% verwendet wurden.

### Beispiel 8 (erfindungsgemäß)

Die Herstellung von GM 1, Komponente A und B erfolgt analog Beispiel 1, mit der Ausnahme, dass in Komponente B statt von 4,8 g Mischpolymerisat 5,2 g eines anderes Mischpolymerisats aus Methylhydrogensiloxy-, Diphenylsiloxy- und Trimethylsiloxy-Endgruppen mit einer Viskosität von 69 mm²/s und einem Si-H-Gehalt von 0,8 Gew.-% verwendet wurden.

### Beispiel 9 (erfindungsgemäß)

Die Herstellung von GM 1, Komponente A und B erfolgt analog Beispiel 1, mit der Ausnahme, dass in Komponente B anstatt von 4,8 g Mischpolymerisat 5,0 g eines Mischpolymerisat aus Methylhydrogensiloxy-, -OSi(Me)2-C6H4-Si(Me)20- und Trimethylsiloxy-Endgruppen mit einer Viskosität von 73 mm²/s und einem Si-H-Gehalt von 0,82 Gew.-% verwendet wurden.

### Beispiel 10 (erfindungsgemäß)

Die Herstellung von GM 1, Komponente A und B erfolgt analog Beispiel 1, mit der Ausnahme, dass in Komponente B statt 0,5 g Tetramethylcyclotetrasiloxan 0,5 g eines Hydrogendimethhylsiloxy-endgestoppertes Si-H-Siloxan mit im Durchschnitt 6 Si-H-Gruppen und einem Si-H-Gehalt von 1,6 Gew.-% verwendet wurde.

Für die Haftversuche wurden jeweils Komponente A und B im Verhältnis 1 : 1 vermischt und wie oben beschrieben auf dem jeweiligen Substrat vernetzt. Die Ergebnisse der Beispiele (Bsp) 1 bis 10 für die Trennkraftmessungen (TK) in [N/mm], und das kohäsive Versagen (KV) in [%], auf den verschiedenen Substraten (Sub) a) bis e) sind in Tabelle 1 und 2 angegeben.

**Tabelle 1**

| **Sub→** | **a)** | | **b)** | | **c)** | | **d)** | | **e)** | | Summe TK |
|---|---|---|---|---|---|---|---|---|---|---|---|
| **Bsp↓** | TK | KV | TK | KV | TK | KV | TK | KV | TK | KV | |
| **1*** | 12,5 | 100 | 9,9 | 100 | 6,7 | 80 | 3,5 | 40 | 3,3 | 40 | 35,9 |
| **2** | 3,4 | 20 | 1,9 | 0 | 5,0 | 60 | 7,0 | 80 | 3,9 | 40 | 21,2 |
| **3** | 1,5 | 0 | 0,9 | 0 | 0 | 0 | 0 | 0 | 0 | 0 | 2,4 |
| **4** | 2,3 | 0 | 0,6 | 0 | 0 | 0 | 0 | 0 | 0 | 0 | 2,9 |

**Tabelle 2**

| **Sub→** | **a)** | | **b)** | | **c)** | | **d)** | | **e)** | | Summe TK |
|---|---|---|---|---|---|---|---|---|---|---|---|
| **Bsp ↓** | TK | KV | TK | KV | TK | KV | TK | KV | TK | KV | |
| **5*** | 11,6 | 100 | 11,1 | 100 | - | - | 6,2 | 40 | - | - | 28,9 |
| **6*** | 7,2 | 80 | 5,4 | 50 | 4,2 | 60 | 6,0 | 70 | 3,8 | 40 | 26,6 |
| **7*** | 9,8 | 100 | 11,2 | 100 | - | - | 3,4 | 40 | 3,2 | 40 | 27,6 |
| **8*** | 10,0 | 100 | 10,5 | 100 | - | - | 3,9 | 40 | 3,2 | 40 | 27,6 |
| **9*** | 12,9 | 100 | 10,4 | 100 | 6,1 | 70 | 4,9 | 40 | 4,4 | 40 | 38,7 |
| **10*** | 6,0 | 70 | 3,9 | 50 | - | - | 3,1 | 40 | 2,4 | 30 | 15,4 |

| | | | | | | | | | | | |
|---|---|---|---|---|---|---|---|---|---|---|---|
| * erfindungsgemäß - nicht bestimmt | | | | | | | | | | | |

Die in Tabelle 1 und 2 angegebenen Werte belegen die hohe Haftfestigkeit von Laminaten, bestehend aus dem erfindungsgemäßen additionsvernetzten Siliconelastomer (Beispiel 1) und organischen Kunststoffen bzw. Metallen, für den Fall der Preßvulkanisation. Mit den erfindungsgemäßen Siliconkautschukmischungen konnten auf allen untersuchten Substraten hohe Haftwerte ohne Ausfallerscheinungen erzielt werden. Auch in der Gesamtsumme der Einzelhaftungen (TK) in [N/mm] schneidet die erfindungsgemäße Siliconkautschukmischung mit Abstand am besten ab.

Wie anhand des Beispiels 2 zu ersehen ist, führt das alleinige Vorhandensein des Bestandteils (B) in Kombination mit einem Haftvermittler (z.B. Glycidyloxypropyltrimethoxysilan) zwar zu insgesamt guten Haftwerten. Diese sind allerdings wesentlich niedriger als die der erfindungsgemäßen Siliconkautschukmischung. Zudem ist die Haftung auf Pocan b) äußerst mäßig. Die Kombination des Bestandteils (B) mit einem sehr Si-H-reichen langkettigen Vernetzer, wie aus Beispiel 3 ersichtlich, führt nur zu äußerst mäßigen Haftwerten. Wie anhand des Beispiels 4 zu ersehen ist, führt auch das alleinige Vorhandensein des Bestandteils (B) nicht zu einer hohen Haftfestigkeit, sondern nur in Verbindung mit einem erfindungsgemäßen Bestandteil (C). Dies ist Beleg einer Synergie der haftungsvermittelnden Bestandteile (B) und (C) der erfindungsgemäßen Siliconkautschukmassen.

Um die Stabilität des Haftverbundes zu untersuchen wurden jeweils 4 Verbundproben bei RT bei 80 % Luftfeuchtigkeit für vier Wochen gelagert und anschließend den Haftuntersuchungen, wie oben beschrieben unterzogen. Die Ergebnisse sind aus Tabelle 3 ersichtlich.

**Tabelle 3**

| **Sub→** | **a)** | | **b)** | | **c)** | | Summe TK |
|---|---|---|---|---|---|---|---|
| **Bsp↓** | TK | KV | TK | KV | TK | KV | |
| 1* | 11,9 | 100 | 9,7 | 100 | 7,1 | 80 | 28,7 |
| 2 | 1,2 | 0 | 1,3 | 0 | 5,2 | 60 | 7,7 |
| 3 | 0 | 0 | 0 | 0 | 0 | 0 | 0 |
| 4 | 0,8 | 0 | 1,5 | 0 | 0 | 0 | 2,3 |

| | | | | | | | |
|---|---|---|---|---|---|---|---|
| * erfindungsgemäß | | | | | | | |

Wie aus Beispiel 1 hervorgeht ändern sich die Haftwerte nach Lagerung des Verbunds kaum. Im Gegensatz dazu nimmt bei den nicht erfindungsgemäßen Massen die Haftung auf einigen Substraten stark ab.

Der Einfluss der Stabilität der jeweiligen A- und B-Komponenten wurden untersucht, indem diese nach dem Herstellen vier Wochen bei RT gelagert wurden und dann erst wurden Haftverbunde nach oben beschriebenen Verfahren hergestellt und hinsichtlich Haftung untersucht. Diese Ergebnisse sind aus Tabelle 4 ersichtlich.

**Tabelle 4**

| **Sub→** | **a)** | | **b)** | | **c)** | | **d)** | | **e)** | | Summe TK |
|---|---|---|---|---|---|---|---|---|---|---|---|
| **Bsp↓** | TK | KV | TK | KV | TK | KV | TK | KV | TK | KV | |
| 1* | 9,4 | 100 | 9,0 | 100 | 6,3 | 60 | 3,4 | 40 | 3,5 | 40 | 31,6 |
| 2 | 1,9 | 0 | 1,4 | 0 | 4,6 | 50 | 7,2 | 60 | 3,5 | 40 | 18,6 |
| 3 | 1,9 | 0 | 1,5 | 0 | 0 | 0 | 0 | 0 | 0 | 0 | 3,4 |
| 4 | 1,3 | 0 | 0 | 0 | 0 | 0 | 0 | 0 | 0 | 0 | 1,3 |

| | | | | | | | | | | | |
|---|---|---|---|---|---|---|---|---|---|---|---|
| * erfindungsgemäß | | | | | | | | | | | |

Wie aus Beispiel 1 hervorgeht ändern sich die Haftwerte auch nach Lagerung der unvernetzten A- und B-Komponenten kaum. Im Gegensatz dazu nimmt bei den nicht erfindungsgemäßen Massen die Haftung auf einigen Substraten stark ab.

In Tabelle 5 ist die Viskosität in [Pa*s] der B-Komponenten der Beispiele 1 bis 4, gemessen am Rheometer bei einer Scherrate von D = 0,98 abgebildet. Es wurde sowohl die Viskosität sofort nach der Herstellung der Mischung als auch nach zwei Wochen Lagerung der Komponenten bei Raumtemperatur gemessen.

**Tabelle 5**

| **Bsp** | **Viskosität sofort** | **Viskosität nach 2 Wochen** | **Viskositätsanstieg in [%]** |
|---|---|---|---|
| **1*** | 911 | 980 | 7,5 |
| **2** | 1090 | 1208 | 10,8 |
| **3** | 927 | 1060 | 14,3 |
| **4** | 991 | 1160 | 17,1 |

| | | | |
|---|---|---|---|
| * erfindungsgemäß | | | |

Wie aus Tabelle 5 ersichtlich ist, weist die erfindungsgemäße Siliconkautschukmischung aus Beispiel 1 die niedrigste Viskosität und den niedrigsten Viskositätsanstieg nach Lagerung auf.

In Tabelle 6 sind die mechanischen Eigenschaften der Beispiele 1 bis 4 wiedergegeben.

**Tabelle 6**

| **Bsp** | **Shore A** | **Reißdehnung [%]** | **Reißfestigkeit [N/mm²]** | **Weiterreißwiderstand [N/mm]** |
|---|---|---|---|---|
| **1*** | 39 | 690 | 9.5 | 24 |
| **2** | 43 | 601 | 8.7 | 20,4 |
| **3** | 43 | 618 | 10 | 21 |
| **4** | 43 | 630 | 9.3 | 17,3 |

| | | | | |
|---|---|---|---|---|
| * erfindungsgemäß | | | | |

Wie aus Tabelle 6 hervorgeht sind die mechanischen Eigenschaften der erfindungsgemäßen Siliconkautschukmischung sehr gut und ausgewogen. Insbesondere weist die Masse eine hohe Reißdehnung und hohe Reißfestigkeit bei hohem Weiterreißwiderstand auf.

## Patentansprüche

1. Selbsthaftende additionsvernetzende Siliconzusammensetzungen, enthaltend
(A) mindestens ein Diorganopolysiloxan der allgemeinen Formel (1)
R¹ₐR²_{b}SiO_{(4-a-b)/2} (1),
in der
**R¹** Hydroxylrest oder einen monovalenten, gegebenenfalls halogensubstituierten, gegebenenfalls O-, N-, S-, oder P-Atome enthaltenden Kohlenwasserstoffrest mit 1 bis 20 Kohlenstoffatomen, der frei von aliphatisch ungesättigten Gruppen ist,
**R²** einen monovalenten, aliphatisch ungesättigten, gegebenenfalls halogensubstituierten, gegebenenfalls O-, N-, S-, oder P-Atome enthaltenden Kohlenwasserstoffrest mit 2 bis 10 Kohlenstoffatomen, **b** Werte von 0,0003 bis 2
bedeuten,
mit der Maßgabe, dass 1,5≤(**a**+**b**)≤3,0, dass pro Molekül durchschnittlich mindestens zwei aliphatisch ungesättigte Reste **R²** enthalten sind und dass die bei 25°C bestimmte Viskosität der Diorganopolysiloxane (A) 1 mPa.s bis 40 000 Pa.s beträgt,
(B) mindestens ein Organohydrogenpolysiloxan der allgemeinen Formel (2)
R³_{c}R⁴_{d}R⁵ₑH_{f}SiO_{(4-c-d-2e-f)/2} (2),
wobei
**R³** einen monovalenten aliphatisch gesättigten Kohlenwasserstoffrest mit 1 bis 10 Kohlenstoffatomen,
**R⁴**
(a) einen gegebenenfalls halogensubstituierten monovalenten Kohlenwasserstoffrest mit 6 bis 20 Kohlenstoffatomen, welcher mindestens einen aromatischen C₆-Ring enthält, oder/und
(b) einen halogensubstituierten, gegebenenfalls O- oder N-Atome enthaltenden gesättigten monovalenten Kohlenwasserstoffrest mit 2 bis 20 Kohlenstoffatomen,
**R⁵** einen beidseitig Si-gebundenen bivalenten, gegebenenfalls halogensubstituierten, gegebenenfalls O-, N-, S-, oder P-Atome enthaltenden Kohlenwasserstoffrest mit 6 bis 24 Kohlenstoffatomen,
**c** und **f** positive Zahlen und
**d** und **e** Null oder eine positive Zahl
bedeuten, mit der Maßgabe, dass d und e nicht gleichzeitig Null sein dürfen und dass die bei 25°C bestimmte Viskosität des Organohydrogenpolysiloxans (B) 5 mPa.s bis 5 Pa.s beträgt,
(C) mindestens ein Organohydrogenoligosiloxan der allgemeinen Formel (3), (4), (5), (6) oder (7)
(R⁶HSiO)ₙ (3),
(R⁶₃Si-O-(R⁶HSiO)ₘ-SiR⁶₃ (4),
(HR⁶₂Si-O-(R⁶HSiO)ₘ-SiHR⁶₂ (5),
(R⁶3Si-O-(R62 SiO)ₚ(R6HSiO)o-SiR63 (6),
(HR⁶₂Si-O-(R⁶₂ SiO)ₚ(R⁶HSiO)ₒ-SiHR⁶₂ (7)
wobei
**R⁶** einen monovalenten, gegebenenfalls halogensubstituierten, Kohlenwasserstoffrest mit 1 bis 10 Kohlenstoffatomen,
**n** 4, 5, 6 , 7, 8,
**m** 4, 5, 6,
**o** 3, 4, 5, und
**p** 3, 4, 5
bedeuten,
mit der Maßgabe, dass **o** ≥ **p** ist und
(D) mindestens einen Hydrosilylierungskatalysator.

2. Siliconzusammensetzung gemäß Anspruch 1, **dadurch gekennzeichnet, dass** weitere Bestandteile (E) enthält, ausgewählt aus der Gruppe enthaltend Inhibitoren, Stabilisatoren, Katalysatoren, Füllstoffe, wie verstärkende und nicht verstärkende Füllstoffe, Weichmacher, Haftvermittler, lösliche Farbstoffe, anorganische und organische Pigmente, Lösungsmittel, Fungizide, Duftstoffe, Dispergierhilfsmittel, rheologische Additive, Korrosionsinhibitoren, Oxidationsinhibitoren, Lichtschutzmittel Hitzestabilisatoren, flammabweisend machende Mittel und Mittel zur Beeinflussung der elektrischen Eigenschaften.

3. Verfahren zur Herstellung von addititonsvernetzten Siliconelastomeren und Verbundmaterialien bei dem die Siliconzusammensetzung gemäß Anspruch 1 und 2 auf 40 bis 250°C erhitzt wird.

4. Additionsvernetzte Siliconelastomere und Verbundmaterialien erhältlich nach dem Verfahren gemäß Anspruch 3.

5. Verwendung der additionsvernetzenden Siliconzusammensetzung zur Herstellung von Verbundmaterial, Formartikeln, zum Verguss und zum Verkleben elektrischer und elektronischer Teile sowie zur Herstellung von Verbundformteilen.

## Claims

1. Self-adhesive addition-crosslinking silicone compositions comprising
(A) at least one diorganopolysiloxane of the general formula (1)
R¹ₐR²_{b}SiO_{(4-a-b)/2} (1)
in which
**R¹** is hydroxyl radical or a monovalent, optionally halogen-substituted hydrocarbon radical optionally containing O, N, S or P atoms, having 1 to 20 carbon atoms, and being free from aliphatically unsaturated groups,
**R²** is a monovalent, aliphatically unsaturated, optionally halogen-substituted hydrocarbon radical optionally containing O, N, S or P atoms and having 2 to 10 carbon atoms,
**b** denotes values from 0.0003 to 2,
with the provisos that 1.5<(**a**+**b**)≤3.0, that per molecule there are on average at least two aliphatically unsaturated radicals **R²**, and that the viscosity of the diorganopolysiloxanes (A) as determined at 25°C is 1 mPa.s to 40 000 Pa.s,
(B) at least one organohydropolysiloxane of the general formula (2)
R³_{c}R⁴_{d}R⁵ₑH_{f}SiO_{(4-c-d-2e-f)/2} (2)
where
**R³** is a monovalent aliphatically saturated hydrocarbon radical having 1 to 10 carbon atoms,
**R⁴**
(a) is an optionally halogen-substituted monovalent hydrocarbon radical having 6 to 20 carbon atoms which contains at least one aromatic C₆ ring, and/or
(b) is a halogen-substituted, saturated monovalent hydrocarbon radical optionally containing O or N atoms and having 2 to 20 carbon atoms,
**R⁵** is an optionally halogen-substituted hydrocarbon radical optionally containing O, N, S or P atoms and having 6 to 24 carbon atoms which is divalent and is Si-bonded at both ends,
**c** and **f** are positive numbers, and
**d** and **e** are zero or a positive number,
with the provisos that d and e cannot simultaneously be zero and that the viscosity of the organohydropolysiloxane (B) as determined at 25°C is 5 mPa.s to 5 Pa.s,
(C) at least one organohydrooligosiloxane of the general formula (3), (4), (5), (6) or (7)
(R⁶HSiO)ₙ (3),
(R⁶₃Si-O-(R⁶HSiO)ₘ-SiR⁶₃ (4),
(HR⁶₂Si-O-(R⁶HSiO)ₘ-SiHR⁶₂ (5),
(R⁶3Si-O-(R62 SiO)ₚ(R6HSiO)o-SiR63 (6),
(HR⁶₂Si-O-(R⁶₂ SiO)ₚ(R⁶HSiO)ₒ-SiHR⁶₂ (7)
where
**R⁶** is a monovalent, optionally halogen-substituted hydrocarbon radical having 1 to 10 carbon atoms,
**n** is 4, 5, 6 , 7, 8,
**m** is 4, 5, 6,
**o** is 3, 4 or 5, and
**p** is 3, 4 or 5,
with the proviso that **o** ≥ **p**, and
(D) at least one hydrosilylation catalyst.

2. Silicone composition according to Claim 1, **characterized in that** it further comprises additional constituents (E) selected from the group containing inhibitors, stabilizers, catalysts, fillers, such as reinforcing and nonreinforcing fillers, plasticizers, adhesion promoters, soluble dyes, organic and inorganic pigments, solvents, fungicides, fragrances, dispersing assistants, rheological additives, corrosion inhibitors, oxidation inhibitors, light stabilizers, heat stabilizers, flame retardants, and agents for influencing the electrical properties.

3. Process for producing addition-crosslinked silicone elastomers and composite materials, which comprises heating the silicone composition according to Claim 1 or 2 at 40 to 250°C.

4. Addition-crosslinked silicone elastomers and composite materials obtainable by the process according to Claim 3.

5. Use of the addition-crosslinking silicone composition for producing composite material, shaped articles, for encapsulating and for adhesively bonding electrical and electronic parts, or for producing composite moldings.

## Revendications

1. Compositions de silicone autoadhésives réticulant par addition, contenant :
(A) au moins un diorganopolysiloxane de formule générale (1)
R¹ₐR²_{b}SiO_{(4-a-b)/2} (1),
dans laquelle :
**R¹** représente un radical hydroxyle ou un radical hydrocarbure monovalent, éventuellement substitué par de l'halogène, contenant éventuellement des atomes de O, N, S ou P, ayant 1 à 20 atomes de carbone, qui est exempt de groupes aliphatiquement insaturés,
**R²** représente un radical hydrocarbure monovalent, aliphatiquement insaturé, éventuellement substitué par de l'halogène, contenant éventuellement des atomes de O, N, S ou P, ayant de 2 à 10 atomes de carbone,
**b** représente des valeurs de 0,0003 à 2,
sous réserve que 1,5 < (**a** + **b**) ≤ 3,0, qu'au moins deux radicaux **R²** aliphatiquement insaturés soient présents en moyenne par molécule et que la viscosité déterminée à 25 °C des diorganopolysiloxanes (A) soit de 1 mPa·s à 40 000 Pa·s,
(B) au moins un organohydrogénopolysiloxane de formule générale (2)
R³_{c}R⁴_{d}R⁵ₑH_{f}SiO_{(4-c-d-2e-f)/2} (2),
dans laquelle :
**R³** représente un radical hydrocarbure monovalent aliphatiquement saturé ayant de 1 à 10 atomes de carbone
**R⁴** représente
(a) un radical hydrocarbure monovalent éventuellement substitué par de l'halogène ayant de 6 à 20 atomes de carbone, qui contient au moins un cycle aromatique en C₆, et/ou
(b) un radical hydrocarbure monovalent saturé, substitué par de l'halogène, contenant éventuellement des atomes de O ou de N, ayant 2 à 20 atomes de carbone,
**R⁵** représente un radical hydrocarbure bivalent, à liaison Si bilatérale, éventuellement substitué par de l'halogène, contenant éventuellement des atomes de O, N, S, ou P, ayant 6 à 24 atomes de carbone,
**c** et **f** représentent des nombres positifs, et
**d** et **e** représentent 0 ou un nombre positif
sous réserve que d et e ne doivent pas être simultanément nuls et que la viscosité déterminée à 25 °C de l'organohydrogénopolysiloxane (B) soit de 5 mPa·s à 5 Pa·s,
(C) au moins un organohydrogénooligosiloxane de formule générale (3), (4), (5), (6) ou (7),
(R⁶HSiO)ₙ (3),
(R⁶₃Si-O-(R⁶HSiO)ₘ-SiR⁶₃ (4),
(HR⁶₂Si-O-(R⁶HSiO)ₘ-SiHR⁶₂ (5),
(R⁶₃Si-O-(R⁶₂SiO)ₚ(R⁶HSiO)-o-SiR⁶₃ (6),
(HR⁶₂Si-O-(R⁶₂SiO)ₚ(R⁶HSiO)-o-SiHR⁶₂ (7)
dans lesquelles :
**R⁶** représente un radical hydrocarbure monovalent, éventuellement substitué par de l'halogène, ayant 1 à 10 atomes de carbone,
**n** représente 4, 5, 6, 7, 8,
**m** 4, 5, 6
**o** 3, 4, 5, et
**p** 3, 4, 5
sous réserve que **o** ≥ **p** et
(D) au moins un catalyseur d'hydrosilylation.

2. Composition de silicone selon la revendication 1, **caractérisée en ce que** (E) contient d'autres composants, sélectionnés parmi le groupe contenant les inhibiteurs, les stabiliseurs, les catalyseurs, les matières de charge, comme des matières de charge renforçantes et non renforçantes, les plastifiants, les agents adhésifs, les matières colorantes solubles, les pigments minéraux et organiques, les solvants, les fongicides, les odorisants, les auxiliaires de dispersion, les additifs rhéologiques, les inhibiteurs de corrosion, les inhibiteurs d'oxydation, les agents de protection contre la lumière, les stabiliseurs de chaleur, les agents ignifugeants et les agents influençant les propriétés électriques.

3. Procédé de préparation d'élastomères de silicone réticulés par addition et de matériaux composites dans lequel la composition de silicone selon la revendication 1 et 2 est chauffée entre 40 et 250 °C .

4. Elastomères de silicone réticulés par addition et matériaux composites que l'on peut obtenir par le procédé selon la revendication 3.

5. Utilisation de la composition de silicone réticulant par addition pour la fabrication de matériaux composites, d'objets moulés, pour l'obturation et le collage d'éléments électriques et électroniques, ainsi que pour la fabrication de pièces moulées composites.
